# NEUE EUROPÄISCHE PATENTSCHRIFT

(11) **EP 2 017 493 B2**
(45) Veröffentlichungstag und Bekanntmachung des Hinweises auf die Entscheidung über den Einspruch: **23.01.2019**
(45) Hinweis auf die Patenterteilung: 17.06.2015
(21) Anmeldenummer: 08158839.4
(22) Anmeldetag: 24.06.2008
(51) Int. Cl.: F16D 13/52, E01C 23/088

(54) **Baumaschine sowie Verfahren zum Schalten des Kraftflusses**
Construction machine and method for shifting power flow
Machine de construction et procédé d'embrayage du flux de force

(30) Priorität: 20.07.2007 DE 202007010294 U
(43) Veröffentlichungstag der Anmeldung: 21.01.2009
(73) Patentinhaber: Wirtgen GmbH, 53578 Windhagen (DE)
(72) Erfinder: Mahlberg, Axel, 53773, Hennef (DE); Schwalbach, Lothar, 53567, Asbach (DE); Hähn, Günter, 53639, Königswinter (DE)
(74) Vertreter: dompatent von Kreisler Selting Werner - Partnerschaft von Patent- und Rechtsanwälten mbB

(56) Entgegenhaltungen:
- EP-A1- 1 589 244
- DE-A1-102005 017 754
- JP-A- H11 325 116
- US-A1- 2006 243 555

## Beschreibung

Die Erfindung betrifft eine Baumaschine, nach dem Oberbegriff des Anspruchs 1 und ein Verfahren zum Schalten des Kraftflusses zwischen einer Antriebswelle und einer Abtriebswelle gemäß Anspruch 13.

Derartige Baumaschinen sind beispielsweise aus der WO02/01005 und der DE 10 2005 017 754 A1 bekannt, eine derartige Schaltkupplung beispielsweise aus JP H11 325 116. Die bei solchen Baumaschinen eingesetzten Verbrennungsmotoren der neueren Generation, insbesondere Dieselmotoren erzeugen aufgrund der Leichtbauweise Drehschwingungen erheblichen Ausmaßes. Dies resultiert unter anderem daraus, dass zunehmend leichte Bauteile, insbesondere leichte Kurbelwellen und Schwungräder verwendet werden und daraus, dass der Verbrennungsvorgang durch geänderte Zündzeitpunkte und Einspritzzeitpunkte aufgrund von Abgasvorschriften andersartig verläuft, wodurch verstärkt Drehschwingungen im Abtriebsstrang entstehen.

Durch die beachtlichen Drehschwingungen entstehen jedoch Probleme bei nachgelagerten Antriebseinrichtungen im Antriebsstrang, wie beispielsweise bei nachgelagerten Kupplungen und Getrieben. Dabei können sich diese Drehschwingungen durch spielbehaftete mechanische Kopplungen, insbesondere formschlüssige Kopplungen, in solchen Kupplungen und Getrieben noch verstärken. Die Materialermüdung und der Verschleiß können sich erheblich vergrößern, was zu geringeren Standzeiten der Elemente in dem Antriebsstrang führen kann. Dabei ist ein progressiver Verstärkungseffekt zu beobachten, denn ein durch diese schädlichen Schwingungen verursachter Verschleiß führt unweigerlich zu einem größeren Spiel, wodurch die Schwingungen wiederum verstärkt werden. Dieses Problem besteht allgemein bei Baumaschinen und insbesondere bei selbstfahrenden Straßenfräsmaschinen, Stabilisierern oder Recyclern, sowie bei Brechanlagen zum Beispiel Backenbrecher oder Prallmühlen.

Der Erfindung liegt die Aufgabe zugrunde, eine Baumaschine und ein Verfahren zum Schalten des Kraftflusses an einer Schaltkupplung zu schaffen, bei denen ein Verschleiß der Antriebsstrangelemente und insbesondere der Schaltkupplung aufgrund der unerwünschten Drehschwingungen auf vorteilhafte Art und Weise verringert wird.

Zur Lösung dieser Aufgabe dienen die Merkmale der Ansprüche 1, 13.

Die Erfindung sieht in vorteilhafter Weise vor, dass an der Schaltkupplung eine zwischen Antriebs- und Abtriebswelle wirkende Bremseinrichtung angeordnet ist, die während des Kupplungseingriffs zusätzlich im Eingriff ist, oder in Eingriff bringbar ist, um Drehschwingungen aufgrund eines Spiels der mechanischen Kopplung zwischen den Kupplungsteilelementen zu eliminieren oder zu reduzieren, wobei vorgesehen ist, dass die Bremskraft die antriebs- oder abtriebsseitigen Kupplungsteilelemente derart miteinander koppelt, dass die mechanische Kopplung zumindest in Lastbetriebsrichtung d.h. in Richtung des Antriebsdrehmomentes, spielfrei ist.

Die Erfindung ermöglicht es in vorteilhafter Weise, die an der Schaltkupplung entstehenden Drehschwingungen zu dämpfen oder zu eliminieren.

Die Bremseinrichtung kann unmittelbar vor, während, oder nach dem Schalten der Kupplung zusätzlich in Eingriff bringbar sein und dann bis zur Trennung des Kupplungseingriffs sich im Eingriff befinden. Die Bremseinrichtung bewirkt, dass innerhalb des zwangsläufig vorhandenen Spiels der mechanischen Kopplung der Kupplungsteilelemente diese in Richtung des Antriebsdrehmomentes aneinander anliegen und durch die Bremseinrichtung in dieser Position fixiert werden, so dass die Verzahnungen der Kupplungstellelemente sich bei einem lastfreien Lauf, d.h. im Leerlaufbetrieb, bei geschalteter Kupplung und ohne ein Lastmoment an der Abtriebswelle, nicht innerhalb des vorhandenen Spiels zueinander hin- und herschwingen können.

Dabei ist das Bremsmoment kleiner als das maximale Moment in Lastrichtung und größer als das maximale Moment in der Gegenrichtung (das Differenzmoment aus den beiden ist das Schleppmoment der Walze) wodurch in Lastrichtung ein einmaliges Durchrutschen bis zur Anlage der Kupplungsteilelemente aneinander erfolgt, aber in der Gegenrichtung ein Durchrutschen vermieden wird. Ist das Bremsmoment kleiner als das maximale Moment entgegen der Lastrichtung, also kleiner als das kleinere der beiden Momente, so kann ein Durchrutschen und damit die Drehschwingung aufgrund des Spiels der mechanischen Kopplung nicht eliminiert, aber zumindest reduziert werden.

Auf diese Weise wird der Verschleiß im Antriebsstrang und insbesondere an den Kupplungsteilelementen vermieden, so dass die Standzeit der Schaltkupplung und sonstige Elemente des Antriebsstrangs erheblich verlängert wird.

Die von der Bremseinrichtung erzeugte Bremskraft kann derart eingestellt sein, dass das aus der Bremskraft resultierende Bremsmoment zwischen der Antriebswelle und der Abtriebswelle kleiner ist als das Lastmoment der Abtriebswelle im Arbeitsbetrieb und größer ist als das Schleppmoment der Abtriebswelle, wenn sich die rotierende Arbeitswalze nicht im Arbeitsbetrieb befindet.

Die von der Bremseinrichtung erzeugte Bremskraft kann derart eingestellt sein, dass das aus der Bremskraft resultierende Bremsmoment zwischen der Antriebswelle und der Abtriebswelle größer ist, als das im lastfreien Betrieb im Antriebsstrang maximal auftretende Drehmoment. Auf diese Weise ist sichergestellt, dass die spielbehafteten Elemente der mechanischen Kopplung stets in einer durch den Bremseingriff definierten Position verbleiben, solange der Betriebszustand des lastfreien Betriebs vorliegt.

Es versteht sich von selbst, dass die Bremseinrichtung für den Betrieb der Arbeitswalze unter Last ohne Wirkung ist, weil die Lastmomente dann um ein Vielfaches höher sind als das eingestellte Bremsmoment. In diesem Betriebszustand ist eine Wirkung der Bremseinrichtung auch nicht erforderlich, weil die Kupplungsteilelemente aufgrund der extrem hohen Momente, die dann übertragen werden, so stark vorgespannt sind, dass ein Schwingen der Kupplungsteilelemente gegeneinander nicht möglich ist.

Die mechanische Kopplung zwischen den antriebs- oder abtriebsseitigen Kupplungsteilelementen besteht vorzugsweise aus mindestens einer Verzahnung.

Die Bremseinrichtung weist mindestens einen Bremsbelag auf, der an einem an-und/oder abtriebsseitigen Kupplungselement der Schaltkupplung angeordnet ist. Die Haftreibung des Bremsbelages ist derart ausgelegt, dass im lastfreien Betrieb die Antriebsseite der Schaltkupplung praktisch starr mit der Abtriebsseite der Schaltkupplung gekoppelt ist. Wesentlich ist dabei, dass an der Bremseinrichtung im lastfreien Betrieb kein Schlupf entstehen kann.

Die Bremseinrichtung kann einen in Axialrichtung elastischen Ringflansch aufweisen, der im Betrieb unter Kraftschluss im Eingriff mit einer axialen Anlagefläche eines an- oder abtriebsseitigen Kupplungselementes ist.

Alternativ kann die Bremseinrichtung radialwirkende Bremsbeläge aufweisen, die mit entsprechenden radialen Anlageflächen eines an- oder abtriebsseitigen Kupplungselementes zusammenwirken können.

Bei einem bevorzugten Ausführungsbeispiel ist vorgesehen, dass zumindest ein Teil der Bremseinrichtung drehfest an einem beweglichen Teil der abtriebsseitigen Kupplungselemente angeordnet ist. Hierzu eignet sich beispielsweise ein axial beweglicher abtriebsseitiger Druckkolben, der die Reibbeläge der Kupplung in Eingriff bringt.

Die Bremseinrichtung kann mit einer Stirnfläche oder einer Umfangsfläche eines mit der An- oder Abtriebswelle drehfest gekoppelten Hohlrings, der ein Kupplungsteilelement bildet, in Eingriff gebracht werden.

Bei einer bevorzugten Ausführungsform ist vorgesehen, dass die beweglichen abtriebsseitigen Kupplungselemente hydraulisch betätigbar sind, und dass der Ringflansch der Bremseinrichtung mit dem Hydraulikkolben für die Kupplungsbetätigung gekoppelt ist.

Bei einer radial wirkenden Bremseinrichtung kann der Bremsbelag bei Drehung der Abtriebswelle durch Fliehkräfte in Eingriff gelangen.

Als alternative Bremseinrichtung kann eine elektromagnetische Bremse oder eine Wirbelstrombremse verwendet werden.

Der Antriebsstrang enthält beispielsweise
- eine Schaltkupplung zum Schalten des Kraftflusses,
- ein Zugmittelgetriebe mit An- und Abtriebmitteln,
- ein Planetengetriebe für die Arbeitswalze, und/oder
- eine elastische Kupplung, und/oder
- ein Pumpenverteilergetriebe.

Es kann zusätzlich an der Arbeitswalze oder in dem Antriebsstrang hinter dem Verbrennungsmotor mindestens ein Schwingungsdämpfer und/oder Schwingungstilger angeordnet sein, der von dem Verbrennungsmotor erzeugte Drehschwingungen eliminieren oder zumindest reduzieren soll.

Vorzugsweise besteht der Schwingungsdämpfer und/oder Schwingungstilger aus einem Elastomer-Metall-Verbundelement. Der Schwingungsdämpfer und/oder Schwingungstilger kann aus einer koaxial zu der jeweiligen Welle, in der die Drehschwingungen des Verbrennungsmotors auftreten, angeordneten Zusatzmasse oder Schwingmasse bestehen, die in Drehschwingungen versetzbar ist, die den Drehschwingungen des Verbrennungsmotors aufgrund von Trägheit entgegenwirken.

Der mindestens eine Schwingungsdämpfer und/oder Schwingungstilger kann an der Schaltkupplung abtriebsseitig angeordnet sein.

Weitere vorteilhafte Ausgestaltungen der Erfindung sind den Unteransprüchen zu entnehmen.

Im folgenden wird unter Bezugnahme auf die Zeichnungen ein Ausführungsbeispiel der Erfindung näher erläutert:

Es zeigen:
- Fig. 1: eine Straßenbaumaschine,
- Fig. 2: einen schematisch dargestellten Antriebsstrang in der Straßenbaumaschine,
- Fig. 3: eine schematische Seitenansicht des Antriebsstranges,
- Fig. 4: eine Schaltkupplung mit abtriebsseitig vorgesehener Bremseinrichtung, sowie mit einem optionalen Schwingungsdämpfer,
- Fig. 5: einen Schnitt entlang der Linie V-V in Fig. 4,
- Fig. 6: den Schwingungsdämpfer der Kupplung gemäß Fig. 4,
- Fig. 7: eine Schaltkupplung mit radial wirkender Bremseinrichtung Schwingungsdämpfer, und
- Fign. 8: die radial wirkende Bremseinrichtung gemäß Fig. 7.

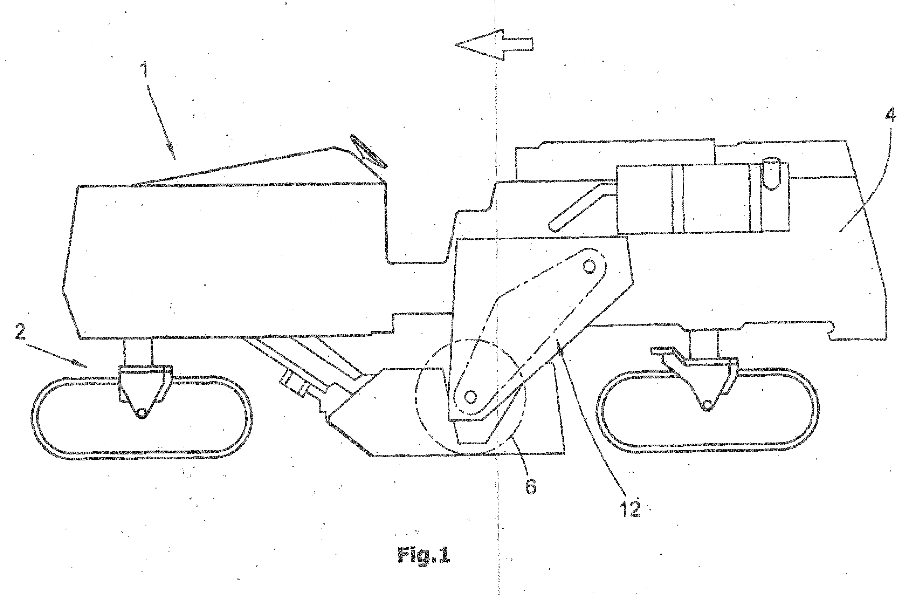

Fig. 1 zeigt eine Baumaschine 1 in Form einer Großfräse mit einem von einem höhenverstellbaren Fahrwerk 2 getragenen Maschinenrahmen 4 und einem Antriebsmotor 10. An dem Maschinenrahmen 4 ist eine Arbeitswalze 6 mit aus Fräsmeißeln bestehenden Werkzeugen zum Abarbeiten eines Fahrbahnbelages gelagert. Ein Antriebsstrang 8 treibt die Arbeitswalze 6 an. Zu dem Antriebsstrang 8 gehört zumindest ein Zugmittelgetriebe 12.

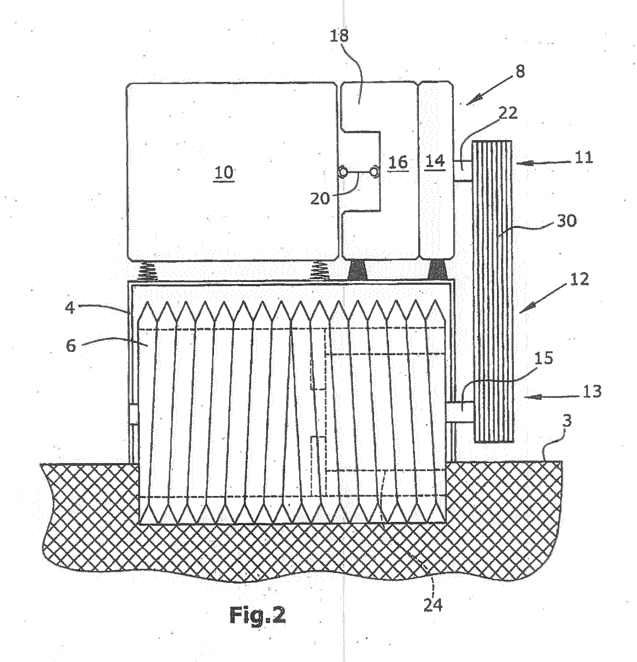

Fig. 2 zeigt schematisch einen Querschnitt durch eine Baumaschine 1, nämlich insbesondere eine Straßenfräsmaschine, einen Recycler oder einen Stabilisierer mit einer Arbeitswalze 6, die in einem Maschinenrahmen 4 gelagert ist. Alternativ kann die Arbeitswalze 6 in einem Walzengehäuse gelagert sein, das wiederum mit dem Maschinenrahmen fest verbunden ist. Die Arbeitswalze 6 kann auch an einem Maschinenrahmen 4 schwenkbar gelagert sein kann. Der Maschinenrahmen 4 wird von einem Fahrwerk 2 getragen, das in Fig. 1 dargestellt ist. Die Arbeitswalze 6 kann beispielsweise aus einer Fräswalze 6 bestehen.

Der Antriebsmotor 10 besteht vorzugsweise aus einem Dieselmotor. Der Verbrennungsmotor 10 kann über eine Elastomerkupplung 20 mit einem Pumpenverteilergetriebe 16 zum Antrieb von hydraulischen Aggregaten, z.B. Hydraulikpumpen 18 gekoppelt sein. Die Elastomerkupplung 20 kann auch an anderer Stelle innerhalb des Antriebsstrangs 8 angeordnet sein.

Ein Zugmittelgetriebe 12 für den mechanischen Antrieb der Arbeitswalze 6 weist ein Antriebselement 11, das mit einer Abtriebswelle 22 drehfest gekoppelt ist, und ein Abtriebselement 13, das mit der Antriebswelle 15 der Arbeitswalze 6 drehfest gekoppelt ist. Zwischen der Antriebswelle 15 und der Arbeitswalze 6 kann noch ein Planetengetriebe 24 angeordnet sein.

Das Zugmittelgetriebe 12 ist vorzugsweise ein Riementrieb, wobei die Antriebs-und Abtriebselemente aus Riemenscheiben 11,13 bestehen, über die mehrere Antriebsriemen 30 umlaufen. Alternativ kann das Zugmittelgetriebe 12 auch aus einem Kettenantrieb bestehen, wobei dann die Antriebs- und Abtriebselemente aus Ritzeln bestehen.

Der Antriebsstrang 8 weist ferner eine herkömmliche Einrichtung zum Schalten des Drehmomentes, die im Antriebsstrang 8 zwischen dem Antriebsmotor 10 und der Arbeitswalze 6 angeordnet ist und vorzugsweise aus einer Schaltkupplung 14, z.B. des Typs Planox, besteht.

Der Antriebsmotor 10 bzw. das Pumpenverteilergetriebe 16 kann über die Schaltkupplung 14 mit der motorseitigen Riemenscheibe 11 gekoppelt sein. Die Arbeitswalze 6 ist am Maschinenrahmen 4 gelagert. In der Arbeitswalze 6 kann ein Untersetzungsgetriebe, z.B. ein Planetengetriebe 24 angeordnet sein, das die Drehzahl der walzenseitigen Riemenscheibe 13 beispielsweise im Verhältnis 1 : 20 untersetzt. Damit kann die Arbeitswalze 6 mit einer Arbeitsdrehzahl von ca. 100 U/min arbeiten, wenn der Verbrennungsmotor 10 mit einer Drehzahl von z.B. 2000 U/min betrieben wird und das Zugmittelgetriebe 12 ein Übersetzungsverhältnis von 1 : 1 hat.

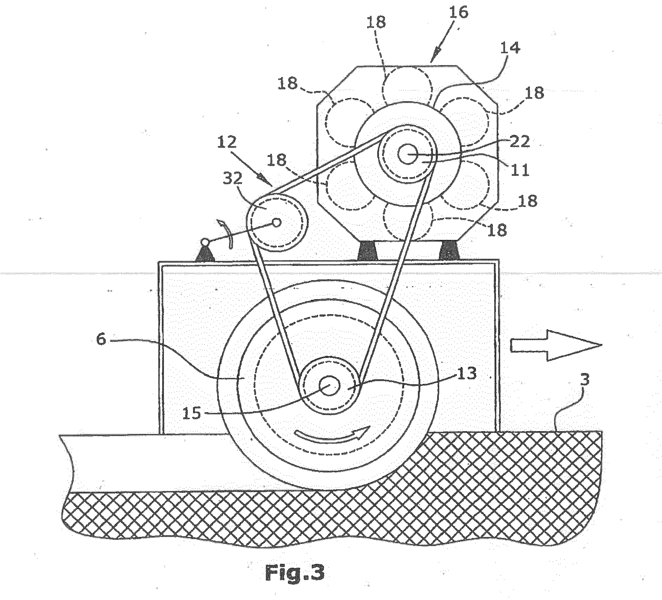

Wie aus Fig. 3 ersichtlich, weist das Pumpenverteilergetriebe 16 beispielsweise sechs Hydraulikpumpen 18 auf, die kreisförmig und mit beispielsweise gleichem gegenseitigen Abstand um die Abtriebswelle 22 des Antriebsstrangs 8 angeordnet sind. In Fig. 3 ist eine Spannrolle 32 für das Zugmittelgetriebe 12 dargestellt.

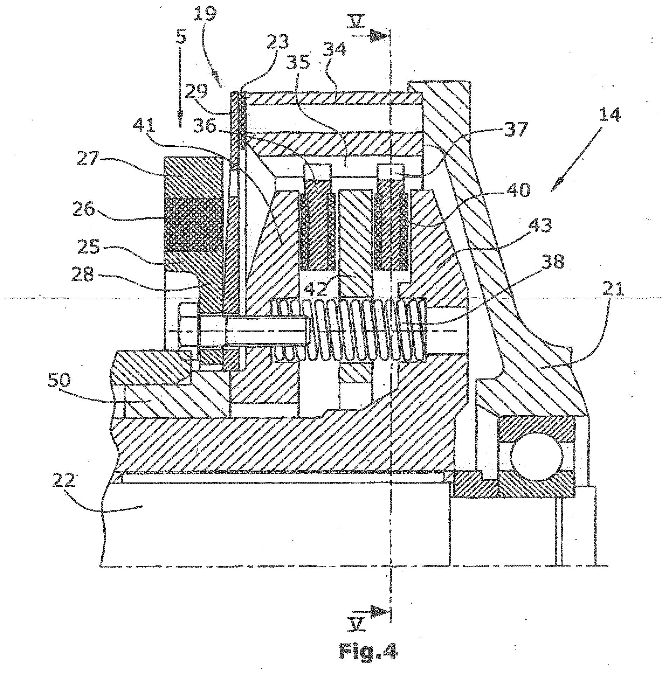

Fig. 4 zeigt eine herkömmliche, vorzugsweise hydraulisch betätigte Schaltkupplung 14 mit einer abtriebsseitig zusätzlich vorgesehenen Bremseinrichtung 19, die unmittelbar vor, während, oder nach der Schaltung der Kupplung zusätzlich in Eingriff bringbar ist und bis zur Beendigung des Kupplungseingriffs im Eingriff bleiben kann. Die Bremseinrichtung 19 wirkt zwischen der Antriebswelle 21 und der Abtriebswelle 22.

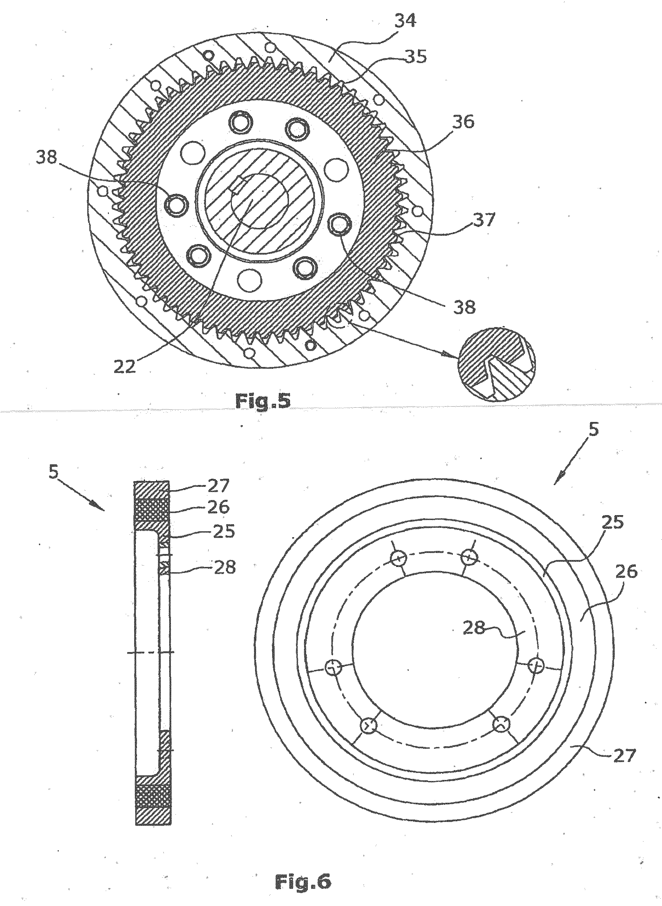

Die Antriebswelle 21 ist mit einem Kupplungsteilelement 34 in Form eines äußeren Hohlrings mit einer Innenverzahnung 35 verbunden, der permanent in formschlüssigem Eingriff ist mit einem inneren Kupplungsteilelement 36 mit einer Außenverzahnung 37. Beide Kupplungsteilelemente 34, 36 sind als Hohlringe ausgeführt. Das Kupplungsteilelement 36 trägt an den axialen Stirnflächen, wie am besten aus Fign. 4 und 6 ersichtlich ist, ringförmige Kupplungsbeläge 40, die mit abtriebsseitigen Kupplungselementen 41,42,43 durch den Kupplungsvorgang in Eingriff gebracht werden können.

Wie des weiteren aus den Fign. 4 und 6 ersichtlich ist, sind zwei in Axialrichtung verschiebbare Kupplungteilelemente 36 vorgesehen, um eine möglichst hohe Drehmomentübertragung zu ermöglichen.

Es versteht sich, dass bei Bedarf mehr als zwei Kupplungsteilelemente 36 oder auch nur ein einziges Kupplungsteilelement 36 vorgesehen sein können. Bei vorzugsweise hydraulischer Betätigung der Schaltkupplung 14 werden die axial beweglichen Kupplungselemente 41,42 an die Kupplungsbeläge 40 der Kupplungsteilelemente 36 angepresst, wobei alle Teile gemeinsam die Kraft auf ein mit der Abtriebswelle 22 gekoppeltes Kupplungselement 43 übertragen.

Die Fig. 4 zeigt die Schaltkupplung 14 in einer Schaltstellung, in der die Kupplungsbeläge 40 noch nicht im Eingriff sind und der Bremsbelag 23 der Bremseinrichtung 14 bereits an der axialen Stirnfläche des äußeren Kupplungsteilelementes 34 anliegt. Es versteht sich, dass der Bremseingriff auch nach Eingriff der Kupplung erfolgen kann. In diesem Fall kann der Verschleiß des Bremsbelages 23 erheblich reduziert werden. Wesentlich ist, dass die Verzahnung 35,37 der Kupplungsteilelemente 34,36 nach dem Einkupplungsvorgang, z.B. in Richtung des Antriebsmomentes aneinander anliegen und in dieser Stellung durch die Bremseinrichtung 19 festgehalten werden, selbst wenn ein lastfreier Lauf im kritischen Betrieb bei niedriger Drehzahl erfolgt. Auf diese Weise ist sichergestellt, dass die Verzahnung 35,37 beispielsweise im lastfreien Betrieb nicht schwingen kann, wodurch der Verschleiß dieser mechanischen Kopplung der Kupplungsteilelemente aufgrund der auftretenden Drehschwingungen im wesentlichen Umfang verringert werden kann.

Die Anordnung der Bremseinrichtung ist nicht auf das in Fig. 4 gezeigte Ausführungsbeispiel beschränkt, vielmehr genügt es, dass die Bremseinrichtung 19 zwischen Antriebs- und Abtriebsseite wirkt und damit ein in der mechanischen Kopplung vorhandenes Spiel dadurch ausgeschlossen wird, dass die beteiligten Elemente in ihrer Lage fixiert werden, so dass sie sich nicht aufgrund der vorhandenen Drehschwingungen innerhalb des vorhandenen Spiels zueinander hinund herbewegen können.

Die axial beweglichen Kupplungselemente 41 und 42 werden bei dem Entkuppel der Schaltkupplung 14 mit Hilfe von beispielsweise sechs Druckfedern 38 auseinander gedrückt, die in Fig. 5 ersichtlich sind, wobei auch die an das bewegliche Kupplungselement 41 befestigte Bremseinrichtung 19 mit dem an einem Ringflansch 29 angeordneten Bremsbelag 23 außer Eingriff mit der axialen Stirnfläche des äußeren Kupplungselementes 34 gebracht wird. Der Ringflansch 29 kann in Axialrichtung elastisch verformbar ausgeführt sein.

Fig. 4 zeigt eine vorzugsweise hydraulisch betätigte Schaltkupplung 14, bei der abtriebsseitig ein Schwingungsdämpfer 5 angekoppelt sein kann, der in Fig. 6 vollständig im Querschnitt und in einer Draufsicht dargestellt ist.

Der Schwingungsdämpfer 5 besteht aus mehreren konzentrischen Ringen, wobei ein erster innerer Ring 25 eine Anschlusseinrichtung 28, z.B. einen Anschlussflansch, aufweist. Dieser erste Ring 25 ist umgeben von einem elastischen Element 26, das in dem Ausführungsbeispiel den ersten Ring vollständig peripher umgibt.

Der konzentrisch und koaxial zu dem ersten Ring 25 verlaufende zweite Ring 27 dient als Schwungmasse und ist seinerseits fest mit dem elastischen Element 26 peripher verbunden.

Die Fig. 6 zeigt eine radiale Anordnung des ersten inneren Rings 25 des elastischen Elementes 26 und des äußeren zweiten Rings 27. Es versteht sich allerdings, dass auch eine axiale Anordnung dieser Ringe 25, 26, 27 möglich ist. Desweiteren muss die Schwungmasse nicht zwangsläufig ringförmig sein, sondern kann aus mehreren symmetrisch um die kraftübertragende Welle angeordnete einzelne Schwungmassen bestehen. Desweiteren kann der erste Ring 25 zugleich die Anschlusseinrichtung 28 bilden. Schließlich kann anstelle des ersten Ringes 25 eine nicht zwangsläufig ringförmige Anschlusseinrichtung 28 vorgesehen sein, die zum Ankoppeln an eine kraftübertragende Welle dient und die mit dem elastischen Element 26 drehfest verbunden ist. An dem elastischen Element ist dann mit radialem Abstand nach außen mindestens eine Schwungmasse drehfest verbunden.

Das elastische Element 26 kann aus einem Elastomer oder auch aus metallischen Federn, z.B. Tellerfedern, Blattfedern oder Schraubenfedern, bestehen, die in Richtung der Drehschwingungen wirken.

Beim Einsatz des elastischen Elementes 26 in einer Schaltkupplung 14 wird eine Steifigkeit von 35000 Nm/rad bis 45000 Nm/rad bevorzugt, wobei sich ein Wert von 40000 Nm/rad als besonders geeignet erwiesen hat. Der relative Dämpfungswert beträgt dabei zwischen 0,15 und 0,2, vorzugsweise 0,175.

Die Schwungmasse des Schwingungsdämpfers 5 wirkt aufgrund seiner Trägheit den Drehschwingungen des Verbrennungsmotors 10 entgegen und dämpft oder eliminiert diese.

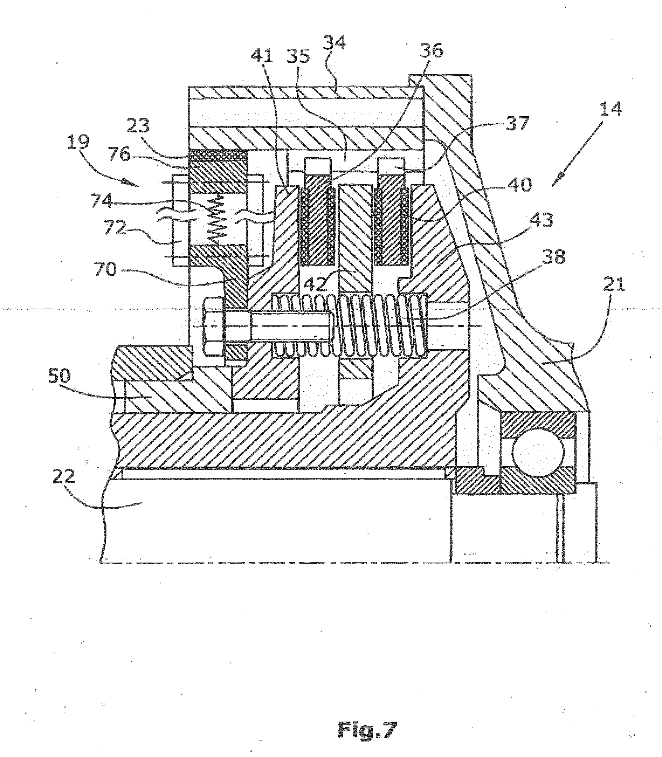

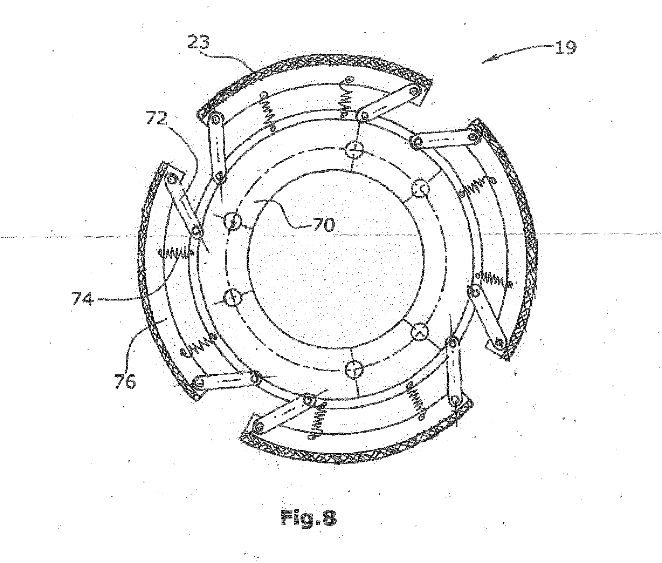

Alternativ können radial wirkende Bremsbeläge 23 wie aus Fign. 7 und 8 ersichtlich, vorgesehen sein, die im Eingriff gegen eine Umfangsfläche eines an- oder abtriebsseitigen Kupplungsteilelementes 34 anliegen.

Fig. 7 zeigt ein Ausführungsbeispiel mit einer radial betätigbaren Bremseinrichtung 19, deren Bremsbeläge 23 unter Fliehkrafteinwirkung gegen eine innere Umfangsfläche des Kupplungsteilelementes 34 anliegen können, wobei die Fliehkraft von der Abtriebswelle 22 abgeleitet werden kann.

Die Bremseinrichtung 19 ist im Detail in der Fig. 8 dargestellt. Die Bremseinrichtung 19 besteht aus einem Ringflansch 70, der beispielsweise an einem beweglichen Kupplungselement 41 befestigt sein kann, wobei vier Bremsbacken, wie sie grundsätzlich von Trommelbremsen bekannt sind, mit radial äußeren Bremsbelägen 23 über Koppelelemente 72 gelenkig und schwenkbar mit dem Ringflansch 70 verbunden sind. Rückholfedern 74 ziehen die Bremsbacken radial nach innen, wenn keine Fliehkraft vorhanden ist. Bei Drehung der Abtriebswelle 22 entsteht mit zunehmender Drehzahl eine Fliehkraft, so dass die Bremsbacken entgegen der Kraft der Rückholfedern 74 radial nach außen gegen das Kupplungsteilelement 34 angedrückt werden.

Die Koppelelemente 72 sind derart ausgerichtet, dass bei Bremseingriff eine Selbsthemmung eintritt.

## Patentansprüche

1. Baumaschine (1), mit
- einer an einem Maschinenrahmen (4) gelagerten Arbeitswalze (6),
- einem Verbrennungsmotor (10) für den Antrieb der Arbeitswalze (6),
- einem Antriebsstrang (8) zwischen dem Verbrennungsmotor (10) und der Arbeitswalze (6), und
- einer Schaltkupplung (14) im Antriebsstrang (8), wobei die Schaltkupplung (14) zwischen einer Antriebswelle (21) und einer Abtriebswelle (22) des Antriebsstrangs (8) angeordnet ist,
- antriebsseitigen Kupplungselemente (34,36), die mit abtriebsseitigen Kupplungselementen (41,42,43) in Eingriff bringbar sind, wobei
- die antriebsseitigen oder die abtriebsseitigen Kupplungselemente (34,36,41,42,43) mehrere Kupplungsteilelemente aufweisen, die über mindestens eine mechanische Kopplung permanent miteinander im Eingriff sind,
**dadurch gekennzeichnet, dass**
an der Schaltkupplung (14) eine zwischen Antriebs- und Abtriebswelle (21,22) wirkende Bremseinrichtung (19) angeordnet ist, die während des Kupplungseingriffs zusätzlich in Eingriff ist, um Drehschwingungen aufgrund eines Spiels der mechanischen Kopplung zwischen den Kupplungsteilelementen (34,36) zu eliminieren oder zu reduzieren, und dass die Bremskraft die antriebs- oder abtriebsseitigen Kupplungsteilelemente (34,36) derart miteinander koppelt, dass die mechanische Kopplung zumindest in Lastbetriebsrichtung spielfrei ist.

2. Baumaschine nach Anspruch 1, **dadurch gekennzeichnet, dass** die von der Bremseinrichtung (19) erzeugte Bremskraft derart eingestellt ist, dass das aus der Bremskraft resultierende Bremsmoment zwischen der Antriebswelle (21) und der Abtriebswelle (22) kleiner ist als das Lastmoment der Abtriebswelle (22) im Arbeitsbetrieb und größer ist als das Schleppmoment der Abtriebswelle (22), wenn sich die rotierende Arbeitswalze (6) nicht im Arbeitsbetrieb befindet.

3. Baumaschine nach Anspruch 1, **dadurch gekennzeichnet, dass** die von der Bremseinrichtung (19) erzeugte Bremskraft derart eingestellt ist, dass das aus der Bremskraft resultierende Bremsmoment zwischen der Antriebswelle (21) und der Abtriebswelle (22) im lastfreien Betrieb kleiner ist als das maximale Moment in Lastrichtung und größer ist als das maximale Moment in der Gegenrichtung.

4. Baumaschine nach Anspruch 1, **dadurch gekennzeichnet, dass** die von der Bremseinrichtung (19) erzeugte Bremskraft derart eingestellt ist, dass das aus der Bremskraft resultierende Bremsmoment zwischen der Antriebswelle (21) und der Abtriebswelle (22) größer ist als das im lastfreien Betrieb im Antriebsstrang (8) maximal auftretende Drehmoment.

5. Baumaschine nach einem der Ansprüche 1 bis 4, **dadurch gekennzeichnet, dass** die an- oder abtriebsseitig angeordnete Bremseinrichtung (19) einen in Axialrichtung elastischen Ringflansch (29) aufweist, der im Betrieb unter Kraftschluss im Eingriff mit einer axialen Anlagefläche eines ab- oder antriebsseitigen Kupplungselementes ist.

6. Baumaschine nach einem der Ansprüche 1 bis 5, **dadurch gekennzeichnet, dass** die Bremseinrichtung (19) radial wirkende Bremsbeläge aufweist.

7. Baumaschine nach einem der Ansprüche 1 bis 6, **dadurch gekennzeichnet, dass** ein Teil der Bremseinrichtung (19) drehfest an einem beweglichen Teil der abtriebsseitigen Kupplungselemente (41) angeordnet ist.

8. Baumaschine nach einem der Ansprüche 1 bis 7, **dadurch gekennzeichnet, dass** die Bremseinrichtung (19) mit einer Stirnfläche oder einer Umfangsfläche eines mit der An- oder Abtriebswelle (21,22) drehfest gekoppelten Kupplungsteilelementes (34) in Eingriff bringbar ist.

9. Baumaschine nach einem der Ansprüche 1 bis 8, **dadurch gekennzeichnet, dass** die beweglichen abtriebsseitigen Kupplungselemente (41,42) hydraulisch betätigbar sind und dass die Bremseinrichtung (19) mit einem Hydraulikkolben (50) für die Kupplungsbetätigung gekoppelt ist.

10. Baumaschine nach Anspruch 6 oder 7, **dadurch gekennzeichnet, dass** die Bremseinrichtung (19) bei Drehung der Abtriebswelle (22) durch Fliehkräfte in Eingriff gelangt.

11. Baumaschine nach einem der Ansprüche 1 bis 10, **dadurch gekennzeichnet, dass** in dem Antriebsstrang (8) in Kraftflussrichtung hinter dem Verbrennungsmotor (10) mindestens ein Schwingungsdämpfer (5) und/oder Schwingungstilger angeordnet ist, der von dem Verbrennungsmotor (10) erzeugte Drehschwingungen eliminiert oder reduziert.

12. Baumaschine nach Anspruch 11, **dadurch gekennzeichnet, dass** der mindestens eine Schwingungsdämpfer (5) und/oder Schwingungstilger an der Schaltkupplung (14) abtriebsseitig angeordnet ist.

13. Verfahren zum Schalten des Kraftflusses zwischen einer Antriebsseite und einer Abtriebsseite einer Schaltkupplung (14) mit mehreren Kupplungsteilelementen (34,36), die in einem Antriebsstrang (8) einer Baumaschine (1) antriebsseitig oder abtriebsseitig durch mindestens eine mechanische Kopplung permanent miteinander gekoppelt sind,
indem ein Kraftschluss zwischen den antriebsseitigen und abtriebsseitigen Kupplungselementen (34,35,36,41,42,43) erzeugt wird, wobei während des Kupplungseingriffs eine Bremskraft zwischen Antriebsseite und Abtriebsseite aufgebracht wird, die Drehschwingungen aufgrund eines Spiels der mechanischen Kopplung zwischen den Kupplungsteilelementen (34,36) eliminiert oder reduziert,
**dadurch gekennzeichnet, dass**
die antriebs- oder abtriebsseitigen Kupplungsteilelemente (34, 36) durch die Bremskraft derart miteinander gekoppelt werden, dass die mechanische Kopplung zumindest in Lastbetriebsrichtung spielfrei ist.

## Claims

1. Construction machine (1), with
- a working drum (6) mounted at a machine frame (4),
- a combustion engine (10) for driving the working drum (6),
- a drive train (8) between the combustion engine (10) and the working drum (6), and
- a clutch (14) in the drive train (8), where the clutch (14) is arranged between a drive shaft (21) and an output shaft (22) of the drive train (8),
- clutch elements (34, 36) on the drive side that are capable of being engaged with clutch elements (41, 42, 43) on the output side, where
- the clutch elements (34, 36, 41, 42, 43) on the drive side or on the output side are provided with several clutch part elements that are permanently engaged with one another via at least one mechanical coupling,
**characterized in that**
a braking device (19) acting between the drive shaft and the output shaft (21, 22) is arranged at the clutch (14), the braking device (19) being additionally engaged during engagement of the clutch in order to eliminate or to reduce any rotary vibrations caused by play of the mechanical coupling between the clutch part elements (34, 36), and **in that** the braking force couples the clutch part elements (34, 36) on the drive side or output side in such a manner that the mechanical coupling is play-free at least in the direction of the load operation.

2. Construction machine in accordance with claim 1, **characterized in that** the braking force generated by the braking device (19) is adjusted in such a manner that the braking torque between the drive shaft (21) and the output shaft (22) resulting from the braking force is smaller than the load torque of the output shaft (22) in working mode, and is larger than the drag torque of the output shaft (22) when the rotating working drum (6) is not in working mode.

3. Construction machine in accordance with claim 1, **characterized in that** the braking force generated by the braking device (19) is adjusted in such a manner that in non-load operation the braking torque between the drive shaft (21) and the output shaft (22) resulting from the braking force is smaller than the maximum torque in the direction of the load, and larger than the maximum torque in the opposite direction.

4. Construction machine in accordance with claim 1, **characterized in that** the braking force generated by the braking device (19) is adjusted in such a manner that the braking torque between the drive shaft (21) and the output shaft (22) resulting from the braking force is larger than the maximum torque occurring in the drive train (8) in non-load operation.

5. Construction machine in accordance with one of the claims 1 to 4, **characterized in that** the braking device (19) arranged on the drive side or output side is provided with an annular flange (29) which is elastic in axial direction and, when in operation under friction lock, is engaged with an axial resting surface of a clutch element on the drive side or output side.

6. Construction machine in accordance with one of the claims 1 to 5, **characterized in that** the braking device (19) is provided with radially acting brake linings.

7. Construction machine in accordance with one of the claims 1 to 6, **characterized in that** one part of the braking device (19) is arranged in a non-rotating manner at a movable part of the clutch elements (41) on the output side.

8. Construction machine in accordance with one of the claims 1 to 7, **characterized in that** the braking device (19) is capable of being engaged with a front surface or a circumferential surface of a clutch part element (34) that is coupled to the drive shaft or output shaft (21, 22) in a non-rotating manner.

9. Construction machine in accordance with one of claims 1 to 8, **characterized in that** the movable clutch elements (41, 42) on the output side are capable of being operated hydraulically, and that the braking device (19) is coupled to a hydraulic piston (50) for the operation of the clutch.

10. Construction machine in accordance with claim 6 or 7, **characterized in that** the braking device (19) is engaged through centrifugal forces during rotation of the output shaft (22).

11. Construction machine in accordance with one of the claims 1 to 10, **characterized in that** at least one vibration damper (5) and/or vibration absorber is arranged in the drive train (8) downstream of the combustion engine (10) in the direction of the power flow, which eliminates or reduces any rotary vibrations generated by the combustion engine (10).

12. Construction machine in accordance with claim 11, **characterized in that** the at least one vibration damper (5) and/or vibration absorber is arranged at the clutch (14) on the output side.

13. Method for switching the power flow between a drive side and an output side of a clutch (14) with a plurality of clutch part elements (34, 36) that are permanently engaged with one another on the drive side or on the output side via at least one mechanical coupling in a drive train (8) of a construction machine (1) by generating a frictional connection between the clutch elements (34, 35, 36, 41, 42, 43) on the drive side or on the output side, wherein during engagement of the clutch, a braking force is applied between the drive side and the output side, which eliminates or reduces any rotary vibrations caused by play of the mechanical coupling between the clutch part elements (34, 36),
**characterized in that**
the braking force couples the clutch part elements (34, 36) on the drive side or output side in such a manner that the mechanical coupling is play-free at least in the direction of the load operation.

## Revendications

1. Machine de chantier (1), comprenant :
- un cylindre de travail (6) supporté sur un bâti de machine (4),
- un moteur à combustion interne (10) pour l'entraînement du cylindre de travail (6),
- une chaîne d'entraînement (8) entre le moteur à combustion interne (10) et le cylindre de travail (6), et
- un embrayage (14) dans la chaîne d'entraînement (8), l'embrayage (14) étant disposé entre un arbre d'entrée (21) et un arbre de sortie (22) de la chaîne d'entraînement (8),
- des éléments d'embrayage côté entrée (34, 36), qui peuvent être mis en prise avec des éléments d'embrayage côté sortie (41, 42, 43), dans laquelle
- les éléments d'embrayage côté entrée ou côté sortie (34, 36, 41, 42, 43) présentent plusieurs éléments d'embrayage qui sont en permanence en prise les uns avec les autres par le biais d'au moins un accouplement mécanique,
**caractérisée en ce que**,
sur l'embrayage (14), il est disposé un dispositif de freinage (19) agissant entre l'arbre d'entrée et l'arbre de sortie (21, 22) qui, pendant l'engagement de l'embrayage, est en prise pour éliminer ou réduire des vibrations de rotation dues à un jeu d'accouplement mécanique entre les éléments d'embrayage (34, 36), et **en ce que** la force de freinage accouple les éléments d'embrayage côté entrée ou côté sortie (34, 36) de telle sorte que l'accouplement mécanique est exempt de jeu au moins dans le sens de fonctionnement en charge.

2. Machine de chantier selon la revendication 1, **caractérisée en ce que** la force de freinage produite par le dispositif de freinage (19) est réglée de telle sorte que le couple de freinage entre l'arbre d'entrée (21) et l'arbre de sortie (22) résultant de la force de freinage est inférieur au couple de charge de l'arbre de sortie (22) en mode de travail et supérieur au couple de traînée de l'arbre de sortie (22) quand le cylindre de travail (6) en rotation ne se trouve pas en mode de travail.

3. Machine de chantier selon la revendication 1, **caractérisée en ce que**, en fonctionnement hors charge, la force de freinage produite par le dispositif de freinage (19) est réglée de telle sorte que le couple de freinage entre l'arbre d'entrée (21) et l'arbre de sortie (22) résultant de la force de freinage est inférieur au couple maximal dans le sens de charge et supérieur au couple maximal dans le sens inverse.

4. Machine de chantier selon la revendication 1, **caractérisée en ce que** la force de freinage produite par le dispositif de freinage (19) est réglée de telle sorte que le couple de freinage entre l'arbre d'entrée (21) et l'arbre de sortie (22) résultant de la force de freinage est supérieur au couple de rotation maximal apparaissant dans la chaîne d'entraînement (8) en fonctionnement hors charge.

5. Machine de chantier selon une des revendications 1 à 4, **caractérisée en ce que** le dispositif de freinage (19) disposé côté entrée ou côté sortie présente une bride annulaire (29) élastique en direction axiale qui, pendant le fonctionnement, est en prise par liaison de force avec une surface d'appui axiale d'un élément d'embrayage côté entrée ou côté sortie.

6. Machine de chantier selon une des revendications 1 à 5, **caractérisée en ce que** le dispositif de freinage (19) présente des garnitures de freins agissant radialement.

7. Machine de chantier selon une des revendications 1 à 6, **caractérisée en ce qu'**une partie du dispositif de freinage (19) est disposée, de manière solidaire en rotation, sur une partie mobile des éléments d'embrayage (41) côté sortie.

8. Machine de chantier selon une des revendications 1 à 7, **caractérisée en ce que** le dispositif de freinage (19) peut être mis en prise avec une surface frontale ou une surface circonférentielle d'un élément d'embrayage (34) couplé, de manière solidaire en rotation, à l'arbre d'entrée ou de sortie (21, 22).

9. Machine de chantier selon une des revendications 1 à 8, **caractérisée en ce que** les éléments d'embrayage mobiles côté sortie (41, 42) peuvent être actionnés hydrauliquement, et **en ce que** le dispositif de freinage (19) est couplé à un piston hydraulique (50) pour l'actionnement de l'embrayage.

10. Machine de chantier selon la revendication 6 ou 7, **caractérisée en ce que** le dispositif de freinage (19) vient en prise lors de la rotation de l'arbre de sortie (22) sous l'action de forces centrifuges.

11. Machine de chantier selon une des revendications 1 à 10, **caractérisée en ce qu'**au moins un amortisseur de vibrations (5) et/ou un absorbeur de vibrations est disposé dans la chaîne d'entraînement (8) en direction du flux de force en aval du moteur à combustion interne (10), lequel élimine ou réduit des vibrations de rotation produites par le moteur à combustion interne (10).

12. Machine de chantier selon la revendication 11, **caractérisée en ce que** le au moins un amortisseur de vibrations (5) et/ou absorbeur de vibrations au moins au nombre de un est disposé sur l'embrayage (14) côté sortie.

13. Procédé de commande du flux de force entre un côté entrée et un côté sortie d'un embrayage (14) avec plusieurs éléments d'embrayage (34, 36) qui, dans une chaîne d'entraînement (8) d'une machine de chantier (1), côté entrée ou côté sortie, sont couplés de façon permanente les uns aux autres par au moins un accouplement mécanique,
par le fait qu'un flux de charge est produit entre les éléments d'embrayage côté entrée et côté sortie (34, 35, 36, 41, 42, 43), une force de freinage étant appliquée entre le côté entrée et le côté sortie pendant l'engagement de l'embrayage, laquelle réduit ou élimine des vibrations de rotation dues à un jeu de l'accouplement mécanique entre les éléments d'embrayage (34, 36),
**caractérisé en ce que** les éléments d'embrayage côté entrée ou côté sortie (34, 36) sont couplés par la force de freinage de telle sorte que l'accouplement mécanique est exempt de jeu au moins dans le sens de fonctionnement en charge.
